# EUROPEAN PATENT SPECIFICATION

(11) **EP 1 228 680 B1**
(45) Date of publication and mention of the grant of the patent: **27.12.2006**
(21) Application number: 02075321.6
(22) Date of filing: 24.01.2002
(51) Int. Cl.: A01D 34/73

(54) **Knife attachment**
Messerbefestigung
Montage de lame

(30) Priority: 01.02.2001 NL 1017256
(43) Date of publication of application: 07.08.2002
(73) Proprietor: Kverneland Nieuw-Vennep B.V., 2153 LR Nieuw-Vennep (NL)
(72) Inventor: Vissers, Hermanus Hendrik, 2451 ZS Leimuiden (NL)
(74) Representative: Voncken, Bartholomeus Maria Ch.

(56) References cited:
- EP-A- 0 807 374
- US-A- 2 916 867

## Description

The invention relates to a knife attachment for a knife of a rotary mower, comprising a shaft which with its upper end is rotatably mounted, locked against downward movement, in a passage of a rotary carrier plate, which shaft furthermore defines an axis of rotation about which the knife can pivot with respect to the carrier plate, and which knife is detachably connected to the lower end of the shaft in a fixed rotary position relative thereto..

A rotary mower, such as a rotary grass cutter, is provided with one rotary carrier plates or a number of such carrier plates, which carry knives which are equally spaced over the circumference thereof. Each knife is capable of pivoting movement with respect to the plate carrier, at least to a limited extent, about the axis of rotation defined by the shaft. This allows a knife to move sideways upon coming into contact with a hard object. The knife attachment affects the rotary connection between the knife and the carrier plate.

With conventional rotary grass cutters, the upper end of the shaft is mounted in the carrier plate whilst the lower end is fixed in an auxiliary plate disposed some distance below the carrier plate. This auxiliary plate is fixed to the carrier plate, in such a manner that the knife is rotatably mounted on the shaft between the carrier plate and the auxiliary plate. When a knife is to be exchanged, for example when it is worn or damaged, the auxiliary plate is moved downwards and the knife can be moved in the upward direction of the shaft.

One drawback of these conventional rotary grass cutters is the fact that the use of a downwardly movable auxiliary plate disposed under the carrier plate leads to a substantial height of the construction, as a result of which it is not possible in all cases to adjust the optimum (small) distance between the knife and the ground surface to be cultivated. In other words, the minimum distance between the knife and the ground surface to be cultivated is determined by the auxiliary plate. In addition, the auxiliary plate is easily fouled.

A knife attachment which is intended to overcome this drawback is already known from US-A-2,916,867, from which the introduction has proceeded. In this known knife attachment, the shaft is free at its bottom end indeed, but the upper end is mounted in the carrier plate, locked against axial movement, by means of a fairly complicated retaining arrangement comprising a great many parts.

It is an object of the present invention to provide a knife attachment of the type referred to in the introduction in which this drawback is eliminated in a simple but nevertheless efficient manner.

In order to accomplish this objective, the knife attachment according to the invention is characterized in an axial (seen in the direction of the shaft) stop is provided which is connected to the carrier plate, with its side facing towards the carrier plate.

The shaft can be fitted in the carrier plate from above, in which position it is locked against further downward movement, as is known per se. Once the knife is connected to the shaft, the shaft can be locked in axial direction against upward movement (in a direction opposed to the direction from which the shaft is fitted in the carrier plate from above) in a very simple but reliable manner as a result of the cooperation between the axial stop and the knife. Complicated facilities on the carrier plate are not required for this purpose. When the knife has been detached from the shaft, however, the shaft can easily be removed from the carrier plate again, for example for replacement or for maintenance.

Preferably, the axial stop consists of a collar surrounding the shaft, which is formed on the side of the carrier plate that faces towards the knife. This leads to a very simple but nevertheless effective construction.

Furthermore it is possible for the lower end of the shaft to be free. It is also conceivable, however, for the shaft to be detachably accommodated in a carrier plate with its lower end in order to increase the stability of the shaft.

The shaft may have a widened upper end, whilst the passage of the carrier plate is correspondingly shaped. As a result, the shaft is locked against downward movement, in particular, but not exclusively so, if the shaft is cantilevered.

According to a preferred embodiment of the knife attachment according to the invention, the rotationally stationary and detachable connection between the knife and the shaft is realised in that the shaft is provided with a substantially radial receiving hole for receiving a correspondingly shaped knife neck, with locking means being used for locking the knife and the shaft in position with respect to each other in their joined position.

When a knife which is mounted in the shaft is to be detached, the locking means are removed, after which the neck of the knife can be moved out of the radial receiving hole. In the reverse direction, the neck of a new knife is inserted into the radial receiving hole, after which the locking means provide the connection between the shaft and the knife. The rotationally stationary nature of the connection between the knife and the shaft is effected by the cooperation between the neck of the knife and the radial receiving hole.

In the above-described embodiment, locking means are used. According to an advantageous embodiment of a knife attachment according to the invention, said locking means can be realised in that the shaft furthermore includes a substantially axial bore which intersects the radial receiving hole, and in that the neck of the knife is provided with an opening which is in line with the axial bore in the joined position, in which position a locking pin can be inserted into the axial bore and be passed through the opening in the neck of the knife.

When the locking pin is present in the axial bore, in which position it extends through the opening in the neck of the knife, the knife is fixedly connected to the shaft. The knife can be removed and possibly be exchanged for another knife, by moving the locking pin in axial direction in the axial bore in such a manner that the opening in the neck of the knife is released.

If, according to another embodiment of the knife attachment according to the invention, the axial bore terminates at the location of said one upper end of the shaft, the force of gravity already causes the locking pin to remain in position in the axial bore, thus ensuring the locking engagement of the knife. The bore can also continue to the other, lower end of the shaft, of course, so that the locking pin becomes accessible to an auxiliary tool at its lower side for the purpose of being moved.

A rotary mower, however may be exposed to strong vibrations during use, so that there is a risk of the locking pin moving into the axial bore so far that a knife will become detached from the shaft due to the action of the centrifugal forces that are produced by the rotation of the carrier plate. According to another embodiment, in order to prevent this phenomenon in a reliable manner, the locking pin can be secured in position by fixing means.

According to one example of such fixing means, the locking pin and the axial bore are each provided with a circumferentially extending slot for clampingly accommodating a resilient ring between them. The two circumferentially extending slots are positioned substantially opposite each other in the axial bore in the mounted position of the locking pin. The resilient ring is confined in the combined receiving space that is thus formed. A certain force is now required for removing the locking pin from the axial bore (or inserting it therein), since the resilient ring needs to be compressed. The resilient ring may be a rubber ring. It is also possible for the locking pin, or the shaft, to have more than one slot for the purpose of defining more than one relative position between the shaft and the locking pin.

If the radial receiving hole becomes narrower towards the inside, a proper centration of the knife of the neck in the shaft is on the one hand obtained, whilst furthermore advantageous constructional conditions are created for the rotationally stationary connection between the knife and the shaft.

The invention will be explained in more detail below with reference to the drawing, which shows an embodiment of the knife attachment according to the invention.

Fig. 1 is a cross-sectional view of an embodiment of the knife attachment according to the invention; and

Fig. 2 is a sectional view along the line II-II in Fig. 1.

The knife attachment that is shown in the figures is intended for pivotally, at least to a limited extent, connecting a knife 1 to a rotary carrier plate 2 (only partially shown) of a rotary grass cutter. The knife attachment mainly consists of a shaft 3, which defines an axis of rotation for the knife 1, and a locking pin 4.

The shaft 3 has a stepped (or oblique) configuration 5 at its upper end, whilst the carrier plate 2 is provided with a correspondingly stepped (or oblique) passage 6. The shaft 3 furthermore includes an axial bore 7 for receiving the locking pin 4. The upper end of this axial bore 7 is provided with a widened portion 8 for receiving a widened head 9 of the locking pin 4.

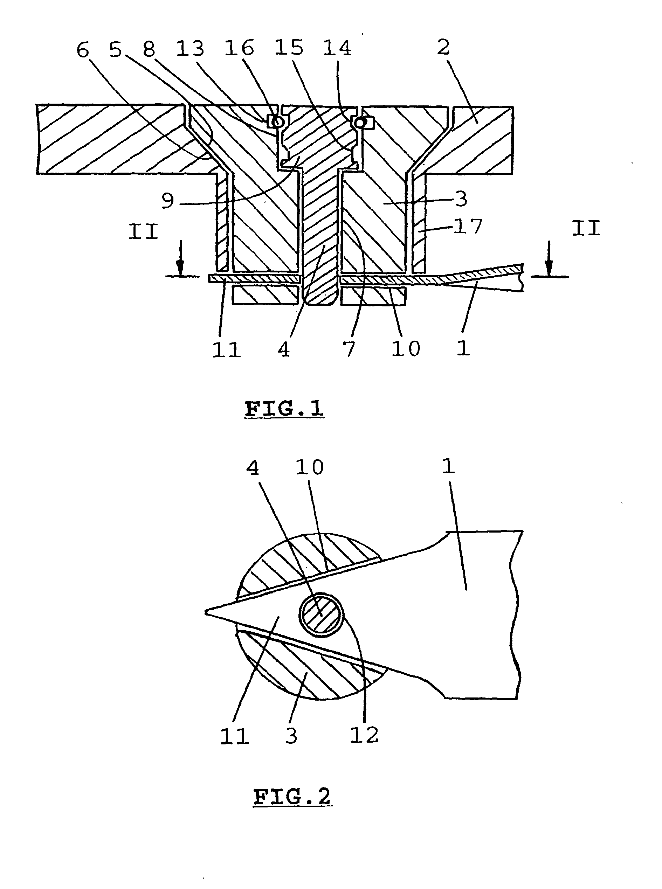

The shaft 3 is furthermore provided with a substantially radial receiving hole 10 for receiving a knife neck 11 of the knife 1. As it appears from Fig. 2, the radial receiving hole 10 becomes narrower towards the inside. Furthermore it is apparent from the figures that the axial bore 7 and the radial receiving hole 10 intersect each other.

An opening 12 is formed in the knife neck 11, which opening is in line with the axial bore 7 in the shaft 3 in the position in which the knife neck 11 is completely inserted into the radial receiving hole 10. In this way it is possible to pass the locking pin 4 through the knife neck 11 in the joined position of the knife 1 and the shaft 3 so as to lock the knife 1 in position in the shaft 3.

At its side facing towards the knife 1, the carrier plate is provided with a collar 17, which surrounds the shaft 3 in the mounted position thereof. The length of the collar 17 is such that the frontal end thereof is adjacent to the upper side of the knife neck 11. This enables this collar 17 to function as an axial stop against undesirable movement of the shaft 3 in upward direction, seen in the figure. The knife 1 thus retains the shaft 3 in the carrier plate 2 in a simple manner. The shaft 3 can easily be removed in upward direction from the carrier plate after the knife 1 has been removed, however.

As a result of the illustrated construction comprising the knife neck 11, the receiving hole 10 and the locking pin 4, the knife 1 and the shaft 3 are interconnected in a rotationally stationary but detachable manner. The upper end of the shaft 3 is rotatably connected to the carrier plate 2 however. As a result of the relatively large contact area between the shaft 3 and the carrier plate 2, a larger wearing surface is obtained, so that an enhanced resistance against wear is furthermore realised. It should be realised that a pivoting movement of the knife 1 with respect to the carrier plate 2 concerns an exceptional situation, namely the situation in which the knife 1 hits a hard object (such as a stone) and needs to move sideways. Under normal circumstances, the knife 1 occupies a radial position which is determined by the centrifugal force.

The axial bore 7 (and also the locking pin 4 in this embodiment) extends along the entire length of the shaft 3 in the illustrated embodiment. In this way, the lower end of the locking pin 4, seen in Fig. 1, can be engaged by means of a tool (not shown) in order to press the said end upwards so far that the knife neck 11 is released and the knife 1 can be removed from the radial receiving hole 10. It is also conceivable, however, for the axial bore 7 to be closed at the bottom end, in which case other measures need to be taken to effect the movement of the locking pin 4 in the axial bore 7.

The axial bore 7 is provided with a circumferentially extending slot 13 at the location of the widened portion 8. The widened head 9 of the locking pin 4 includes two circumferentially extending slots 14 and 15 arranged one above another. In the mounted position of the locking pin 4, the upper circumferential slot 14 is positioned opposite the circumferentially slot 13 of the axial bore 7. A resilient ring 16 is accommodated in the receiving space defined by the two slots 13 and 14. Said ring arranges for the locking pin 14 to be locked in position with respect to the shaft 3. The resilient ring 16 deforms during movement of the locking pin 4 in the axial bore 7 so as to allow the movement of said locking pin 4.

The lower slot 15 functions to define a second position of the locking pin 4 with respect to the shaft 3, in such a manner that the knife neck 11 is released in this position. In this latter position, the resilient ring 16 is present in the receiving space which is formed by the circumferential slot 13 and the circumferential slot 15 in that case.

In order to ensure that the resilient ring will remain in the circumferential slot 13 of the shaft 3 during movement of the locking pin 4, the depth of said circumferential slot may be larger than that of the circumferential slots 14 and 15 of the locking pin 4. Furthermore, the facing sides of the slots 14 and 15 may be bevelled.

Besides a resilient ring 16, also other fixing means may also be used for fixing the locking pin 4 in position in the axial bore 7, for example a spring-loaded ball which mates with a cavity.

Since the shaft 3 is only bearing-mounted in the carrier plate 2 at the location of its upper (during use) end, the constructional height of the knife attachment under the knife 1 is only very small, so that the knife 1 can be moved to a position a short distance above a ground surface to be cultivated. The illustrated knife attachment nevertheless ensures that the knife 1 is fitted in a stable manner. Since the knife 1 is stationary with respect to the shaft 3, the amount of wear on the knife will be reduced to an absolute minimum. If the knife 1 nevertheless needs to be removed and be exchanged for a new knife, because it is damaged or the like, the removal of the old knife and the fitting of a new knife can be realised in a very short time, because only the locking pin 4 must be moved at least partially in the shaft 3, after which the old knife can be removed from the radial receiving hole 10 and a new knife can be fitted. Finally, the locking pin 4 is placed in its locked position again, after which the rotary grass cutter is ready for use.

The invention is not limited to the above-described embodiment, which can be varied in several ways within the scope of the invention as defined in the claims.

## Claims

1. Knife attachment for a knife (1) of a rotary mower, comprising a shaft (3) which with its upper end is rotatably mounted, locked against downward movement, in a passage (6) of a rotary carrier plate (2), which shaft furthermore defines an axis of rotation about which the knife can pivot with respect to the carrier plate, and which knife is detachably connected to the lower end of the shaft in a fixed rotary position relative thereto, **characterized in that** an axial stop (17) is provided, which is connected to the carrier plate and which is located adjacent the knife for engaging the upper side of latter.

2. A knife attachment according to claim 1, **characterized in that** the axial stop consists of a collar (17) surrounding the shaft (3), which is formed on the side of the carrier plate (2) that faces towards the knife.

3. A knife attachment according to claim 1 or 2, **characterized in that** the lower end of the shaft is free.

4. A knife attachment according to claim 1 or 2, **characterized in that** the shaft with its lower end is detachably accommodated in a carrier plate.

5. A knife attachment according to any one of the preceding claims, **characterized in that** the shaft (3) has a widened upper end and **in that** the passage of the carrier plate is correspondingly shaped.

6. A knife attachment according to any one of the preceding claims, **characterized in that** the shaft (3) is provided with a substantially radial receiving hole (10) for receiving a correspondingly shaped knife neck (11), with locking means (4) being used for locking the knife (1) and the shaft (3) in position with respect to each other in their joined position.

7. A knife attachment according to claim 6, **characterized in that** the shaft (3) furthermore includes a substantially axial bore (7) which intersects the radial receiving hole (10), and **in that** the neck (11) of the knife (1) is provided with an opening (12) which is in line with the axial bore in the joined position, in which position a locking pin (4) can be inserted into the axial bore and be passed through the opening in the neck of the knife.

8. A knife attachment according to claim 7, **characterized in that** the axial bore (7) terminates at the location of said one upper end of the shaft.

9. A knife attachment according to claim 7 or B, **characterized in that** the locking pin (4) can be secured in position by fixing means (16).

10. A knife attachment according to claim 9, **characterized in that** the locking pin (4) and the axial bore (7) are each provided with a circumferentially extending slot (14,15;13) for clampingly accommodating a resilient ring (16) between them.

11. A knife attachment according to any one of the claims 6 - 10, **characterized in that** the radial receiving hole (10) becomes narrower towards the inside.

## Patentansprüche

1. Messerbefestigung für ein Messer (1) eines Kreiselmähers, umfassend einen Schaft (3), der mit seinem oberen Ende drehbar montiert und gegen eine Abwärtsbewegung verriegelt ist, in einem Übergang (6) einer Kreiselträgeplatte (2), dessen Schaft darüber hinaus eine Rotationsachse festlegt, um welche sich das Messer in Bezug zur Trägerplatte drehen kann und dessen Messer lösbar mit dem unteren Ende des Schafts verbunden ist in einer relativ zu ihr festgelegten Kreiselposition, **dadurch gekennzeichnet, dass** ein axialer Anschlag (17) vorgesehen ist, der mit der Trägerplatte verbunden ist und der angrenzend zum Messer liegt, um mit dessen oberer Seite in Eingriff zu stehen.

2. Messerbefestigung gemäß Anspruch 1, **dadurch gekennzeichnet, dass** der axiale Anschlag aus einem den Schaft (3) umgebenden Kragen (17) besteht, der auf der Seite der Trägerplatte (2) gebildet wird, die in Richtung des Messers weist.

3. Messerbefestigung gemäß Anspruch 1 oder 2, **dadurch gekennzeichnet, dass** das untere Ende des Schafts frei ist.

4. Messerbefestigung gemäß Anspruch 1 oder 2, **dadurch gekennzeichnet, dass** der Schaft mit seinem unteren Ende lösbar in einer Trägerplatte untergebracht ist.

5. Messerbefestigung gemäß einem der vorhergehenden Ansprüche, **dadurch gekennzeichnet, dass** der Schaft (3) ein geweitetes oberes Ende aufweist und dass der Übergang der Trägerplatte entsprechend geformt ist.

6. Messerbefestigung gemäß einem der vorhergehenden Ansprüche, **dadurch gekennzeichnet, dass** der Schaft (3) mit einem im wesentlichen radialen Aufnahmeloch (10) versehen ist, um einen entsprechend geformten Messerhalses (11) mit Verriegelungsmechanismen (4), die zum Verriegeln des Messers (1) und des Schafts (3) in Position in Bezug zueinander in ihrer verbundenen Position verwendet werden.

7. Messerbefestigung gemäß Anspruch 6, **dadurch gekennzeichnet, dass** der Schaft (3) darüber hinaus eine im Wesentlichen axiale Bohrung (7) aufweist, die das radiale Aufnahmeloch (10) kreuzt und dass der Hals (11) des Messers (1) mit einer Öffnung (12) versehen ist, die mit der axialen Bohrung in der verbundenen Position übereinstimmt, in welcher Position ein Verriegelungsbolzen (4) in die axiale Bohrung eingesetzt und durch die Öffnung im Hals des Messers hindurch geschoben werden kann.

8. Messerbefestigung gemäß Anspruch 7, **dadurch gekennzeichnet, dass** die axiale Bohrung (7)am oberen Ende des Schafts endet.

9. Messerbefestigung gemäß Anspruch 7 oder 8, **dadurch gekennzeichnet, dass** der Verriegelungsbolzen (4) durch Feststelleinrichtungen (16) in Position gehalten werden kann.

10. Messerbefestigung gemäß Anspruch 9, **dadurch gekennzeichnet, dass** der Verriegelungsbolzen (4) und die axiale Bohrung (7)jeweils einen sich um den Umfang erstreckenden Schlitz (14, 15; 13) zur klemmenden Unterbringung eines federnden Rings (16) zwischen ihnen aufweist.

11. Messerbefestigung gemäß einem der vorhergehenden Ansprüche 6 - 10, **dadurch gekennzeichnet, dass** das radiale Aufnahmeloch (10) in Richtung der Innenseite enger wird.

## Revendications

1. Attache de lame pour une lame (1) d'une faucheuse rotative, comprenant un arbre (3) qui avec son extrémité supérieure est monté avec faculté de rotation, verrouillé contre un mouvement vers le bas, dans un passage (6) d'une plaque porte-lame rotative (2), lequel arbre définit en outre un axe de rotation autour duquel la lame peut pivoter par rapport à la plaque porte-lame, et laquelle lame est reliée de manière détachable à l'extrémité inférieure de l'arbre dans une position rotative fixe par rapport à celui-ci, **caractérisée en ce qu'**un arrêt axial (17) est prévu, qui est relié à la plaque porte-lame et qui est situé adjacent à la lame pour mise en prise du côté supérieur de cette dernière.

2. Attache de lame selon la revendication 1, **caractérisée en ce que** l'arrêt axial consiste en un collier (17) entourant l'arbre (3), qui est formé sur le côté de la plaque porte-lame (2) qui fait face à la lame.

3. Attache de lame selon la revendication 1 ou 2, **caractérisée en ce que** l'extrémité inférieure de l'arbre est libre.

4. Attache de lame selon la revendication 1 ou 2, **caractérisée en ce que** l'arbre avec son extrémité inférieure est logé de manière détachable dans une plaque porte-lame.

5. Attache de lame selon l'une quelconque des revendications précédentes, **caractérisée en ce que** l'arbre (3) a une extrémité supérieure élargie et **en ce que** le passage de la plaque porte-lame est façonné en correspondance.

6. Attache de lame selon l'une quelconque des revendications précédentes, **caractérisée en ce que** l'arbre (3) est doté d'un trou de réception sensiblement radial (10) destiné à recevoir un col de lame façonné en correspondance (11), un moyen de verrouillage (4) étant utilisé pour verrouiller la lame (1) et l'arbre (3) en position l'un par rapport à l'autre dans leur position jointe.

7. Attache de lame selon la revendication 6, **caractérisée en ce que** l'arbre (3) comprend en outre un alésage sensiblement axial (7) qui coupe le trou de réception radial (10), et **en ce que** le col (11) de la lame (1) est doté d'une ouverture (12) qui est en ligne avec l'alésage axial dans la position jointe, position dans laquelle une goupille de verrouillage (4) peut être insérée dans l'alésage axial et être passée à travers l'ouverture dans le col de la lame.

8. Attache de lame selon la revendication 7, **caractérisée en ce que** l'alésage axial (7) se termine à l'emplacement de ladite extrémité supérieure de l'arbre.

9. Attache de lame selon la revendication 7 ou 8, **caractérisée en ce que** la goupille de verrouillage (4) peut être fixée en position par un moyen de fixation (16).

10. Attache de lame selon la revendication 9,
**caractérisée en ce que** la goupille de verrouillage (4) et l'alésage axial (7) sont chacun dotés d'une fente s'étendant circonférentiellement (14, 15 ; 13) destinée à loger de manière encastrée une bague résiliente (16) entre eux.

11. Attache de lame selon l'une quelconque des revendications 6 à 10, **caractérisée en ce que** le trou de réception radial (10) devient plus étroit vers l'intérieur.
